# EUROPÄISCHE PATENTSCHRIFT

(11) **EP 0 542 958 B1**
(45) Veröffentlichungstag und Bekanntmachung des Hinweises auf die Patenterteilung: **18.09.1996**
(21) Anmeldenummer: 92911269.6
(22) Anmeldetag: 04.06.1992
(51) Int. Cl.: C02F 11/12, F26B 7/00

(54) **VERFAHREN UND ANLAGE ZUM BEHANDELN VON SCHLAMM- ODER PRESSKUCHEN**
METHOD AND INSTALLATION FOR THE TREATMENT OF SLUDGE OR PRESS CAKES
PROCEDE ET INSTALLATION POUR LE TRAITEMENT DE TOURTEAUX DE BOUE OU DE TOURTEAUX PRESSES

(30) Priorität: 07.06.1991 DE 4118783
(43) Veröffentlichungstag der Anmeldung: 26.05.1993
(73) Patentinhaber: ALB. KLEIN GmbH & Co. KG, D-57568 Niederfischbach (DE)
(72) Erfinder: KLEIN, Otto, D-5905 Freudenberg (DE); BURGGRAEF, Tilman, D-5165 Hürtgenwald 4 (DE)
(74) Vertreter: Hiebsch, Gerhard F., Dipl.-Ing.
(86) Internationale Anmeldenummer: EP9201238
(87) Internationale Veröffentlichungsnummer: WO9221623

(56) Entgegenhaltungen:
- EP-A- 0 175 847
- EP-A- 0 481 397
- DE-B- 2 720 178
- FR-A- 1 313 008
- FR-A- 2 369 525

## Beschreibung

Die Erfindung betrifft ein Verfahren und eine Anlage zum mehrstufigen Behandeln von Schlamm- oder Preßkuchen aus Suspensionen oder schlammartigen Gemischen, vor allem aus Klärschlamm kommunaler Kläranlagen, durch Auspressen eines Schlamm- oder Preßkuchens und dessen anschließendes thermisches Trocknen im Vakuum.

Zur Klärschlammentwässerung werden üblicherweise Zentrifugen oder Siebbandpressen eingesetzt, die jedoch häufig nicht die Feststoffgehalte erreichen, wie sie von Deponieverwaltungen gefordert werden. Eine Verbesserung wurde durch den Einsatz von Hochdruckbandpressen zur Schlammentwässerung erzielt, wie sie beispielsweise in der DE-PS 27 20 178 der Anmelderin beschrieben sind. Hochdruckbandpres-sen erreichen einen Feststoffgehalt im Preßkuchen, der etwa 5 bis 10 % höher ist als bei Entwässerung auf normalen Siebbandpressen unter der Voraussetzung, daß der zu entwässernde Klärschlamm ausreichende Entwässerungsqualität aufweist, damit der in Hochdruckbandpressen erzielbare Preßdruck überhaupt angewendet werden kann. Um Hochdruckbandpressen mit Erfolg auch bei schwierigen Schlämmen einsetzen zu können -- wie z.B. bei biologischem Überschußschlamm, der nur eine sehr geringe Preßstabilität besitzt, schon bei geringer Druckbeanspruchung infolge seiner thixotropen und strukturviskosen Eigenschaften zu fließen beginnt und durch die Maschen des Filtertuches gepreßt wird -- ist es üblich, Sägemehl oder Torfmull als strukturbildende Stoffe unterzumischen. Die Nachteile dieses Verfahrens bestehen darin, daß einerseits große Mengen entsprechender Zuschlagstoffe kostenträchtig beschafft, zur Kläranlage transportiert und dort bevorratet werden müssen und daß andererseits durch die Zuschlagstoffe die zu deponierende Abfallmenge erheblich vergrößert wird. Die Zugabe von 10 kg Sägemehl/m³ Dünnschlamm mit 3 % Feststoffgehalt vergrößert die Deponiemenge um 33 %.

Auch ist bekannt, mit dem Preßkuchen einen nachgeschalteten thermischen Trockner mit direkter oder indirekter Beheizung zu beschicken. Trockner für Klärschlämme aus kommunalen und industriellen Kläranlagen arbeiten alle bei Atmosphärendruck im offenen System; d.h. zur Verdampfung von Wasser wird das gesamte Produkt im Trockner auf zumindest 100°C erhitzt, dabei verdampft Wasser. Der Wasserdampf kann über dem Trockner durch Ventilatoren abgesaugt und in Kühlern kondensiert werden. Gleichzeitig mit dem Dampf wird eine große Menge nicht kondensierbare Luft abgesaugt, die ebenfalls im Kühler abgekühlt werden muß. Diese große Luftmenge sättigt sich mit anderen aus dem Schlamm frei werdenden Gasen und kann nur über große Absorber geführt werden, um geruchsfrei in die Atmosphäre zu gelangen.

Schließlich offenbart die EP-A-175 847 ein Verfahren zum Behandeln von Schlamm- oder Preßkuchen aus Suspensionen, durch Auspressen eines Schlamm- oder Preßkuchens und dessen anschließendes Trocknen, wobei der Schlamm- oder Preßkuchen zweistufig getrocknet wird, und wobei die erste Stufe mit Unterdruck und die zweite Stufe mit Normal- oder Überdruck betrieben wird.

Die Abwasserschlämme mit einem Feststoffgehalt von dort üblicherweise 1 bis 10 % Trockensubstanz werden über einen Einspritzkondensator geführt und auf Zentrifugen, Siebbandpressen etc. bis zu einem Feststoffgehalt von 10 bis 35 % Trockensubstanz entwässert.

Mit dem vorentwässerten Schlamm wird ein dampf- oder brüdenbeheizter Dünnschichtverdampfer oder Scheibentrockner beschickt. Die in diesem Trockner anfallenden Brüden werden in einem Einspritzkondensator bei Temperaturen von 10 bis 40°C kondensiert. Damit stellt sich schlammseitig im Trockner ein Druck ein, der um die Druckverluste des Systems höher ist, als der Dampfdruck von Wasser bei der höchsten Temperatur im Einspritzkondensator.

Der Trockner wird mit Dampf von annähernd Umgebungsdruck oder Wärmeträgeröl beheizt, womit die nötige Verdampfungsleistung erreicht wird. Der Dampf zur Beheizung der ersten Stufe wird in einem Dampfkessel erzeugt, der durch Kondensation der Brüden aus der 2. Stufe in einem speziellen Wärmetauscher beheizt wird.

Wird bei diesem bekannten Trockner statt Dampf Wärmeträgeröl verwendet, so muß dieses mit den Brüden aus der 2. Stufe auf eine Temperatur von ca. 90 bis 120°C aufgeheizt werden.

Die Brüden von der 2. Stufe müssen mit einem Brüdenverdichter soweit verdichtet werden, daß in der ersten Stufe eine annähernd gleiche Temperaturdifferenz zur Verfügung steht wie in der 2. Stufe (falls beide Stufen mit Dampf beheizt werden).

Der vorgetrocknete Schlamm aus der 1. mit Unterdruck betriebenen Stufe wird in der 2. Stufe mit Dampf von 6 bis 12 bar, also mit Überdruck, oder mit Wärmeträgeröl von 180 bis 300°C, getrocknet.

Das aus der EP-A-175 847 bekannte Verfahren ist also äußerst aufwendig.

In Kenntnis dieses Standes der Technik hat sich der Erfinder das Ziel gesetzt, die Behandlung von Schlamm- oder Preßkuchen zu verbessern, zu vereinfachen und insbesondere den Trockengrad zu erhöhen.

Zur Lösung dieser Aufgabe führen die Lehren der selbständigen Patentansprüche; erfindungsgemäß sind wenigstens zwei Vakuumstufen zum Trocknen des Schlamm- oder Preßkuchens vorgesehen, dem in einer Mischzone vor der ersten Vakuumstufe Trockensubstanz zugemischt wird.

Als günstig hat es sich vor allem erwiesen, die Trockensubstanz, beispielsweise Filterstaub, aus dem Trocknungsverfahren selbst zu entnehmen sowie zur Mischzone zu führen, also rezyklierte Feststoffe einzusetzen.

Weitere Merkmale und Verbesserungen sind den Unteransprüchen zu entnehmen.

Erfindungsgemäß wird in einem geschlossenen System, einer mehrstufigen Vakuumtrocknungsanlage, der aus Zentrifugen oder Pressen anfallende Schlamm- oder Preßkuchen von etwa 30 % Trockensubstanz auf 90 bis 95 % Trockensubstanz thermisch getrocknet.

In dem beheizbaren Trockner wird der Druck soweit herabgesetzt, daß das im Schlamm enthaltene Wasser bereits bei ca. 80°C verdampft. Wegen dieser Siedetemperaturabsenkung muß nicht die gesamte Produktmenge auf 100°C aufgeheizt werden. Der Wasserdampf strömt zu einem Kondensator und kondensiert dort. Durch das geschlossene vakuumdichte System werden mit dem Wasserdampf geringe Mengen nichtkondensierbarer Gase (Luft) abgesaugt.

Erfindungsgemäß dient ein Vortrockner als Kondensator; in diesem Vortrockner wird in einem Doppelmantel der Wasserdampf kondensiert, dieser gibt die Kondensationswärme an das Produkt im Vortrockner ab, so daß der größte Teil der Wärme zurückgewonnen wird. Im Vortrockner wird mit diesem ca. 80°C heißen Dampf das Produkt (Klärschlamm) auf ca. 50°C erwärmt. Durch Vakuum von ca. 100 mbar wird im Vortrockner das Wasser zum Teil schon verdampft. Dieser ca. 50°C heiße Dampf wird wiederum in einen Vorwärmer geleitet, dort kondensiert und mit der Kondensationswärme das Produkt (Klärschlamm) vorgewärmt.

Das so vorgewärmte Produkt wird in den Vortrockner gefüllt, vorgetrocknet und in dem Haupttrockner auf die gewünschte Endfeuchte fertiggetrocknet.

Dieses System ist durch die Hintereinanderschaltung von drei Stufen und die damit zu erzielende Wärmerückgewinnung gegenüber den bekannten Systemen sehr energiesparend. Es werden ca. 50 % Energie gegenüber anderen Trocknern eingespart. Geringe Inertgasmengen werden durch die Vakuumpumpe abgesaugt sowie über ein Aktivkohlefilter gereinigt und geruchsfrei der Atmosphäre zugeführt.

Der aus kommunalen Kläranlagen anfallende getrocknete Schlamm hat einen Heizwert von 12.000 und 18.000 KJ/kg und kann zur Energieerzeugung verbrannt werden. Der getrocknete und granulierte Schlamm läßt sich auch sehr gut deponieren. Es ist möglich, durch eine kurzfristige Anwendung einer hohen Aufheiztemperatur von 121°C das Produkt steril, hygienisch einwandfrei, fast geruchslos werden zu lassen, das dann auch als Dünger Verwendung finden kann.

Da das Endgewicht nur etwa 30 % des Ursprunggewichtes ist, werden erhebliche Deponiekosten gespart, so daß die Investitionskosten der Anlage schnell amortisiert sind.

Auch kann getrockneter Industrieschlamm ohne nennenswerten Heizwert als Füllmaterial, beispielsweise in der Zementindustrie, eingesetzt werden.

Die erfindungsgemäße Anlage ist weitgehend automatisch zu betreiben; Bedienung und Überwachung erfolgen von einer Steuerzentrale aus über Mikroprozessoren. Mögliche Störungen werden dort lokalisiert und angezeigt, wodurch die gesamte Anlage wartungsfreundlich und einfach zu bedienen ist.

Durch die vorstehend beschriebenen Maßnahmen können die Trockenzeiten erheblich verkürzt werden, hierdurch werden die Anlagen in ihren Dimensionen bei gleicher Leistung wesentlich kleiner und die Investitionskosten niedriger, auch der Platzbedarf am Aufstellungsort ist wesentlich geringer. Zusammenfassend sind weitere Vorzüge des beschriebenen Verfahrens bzw. der dafür konzipierten Anlage u.a. die folgenden:
- das geschlossene System des Vakuumtrockners, daher keine Geruchsbelästigung der Umwelt bei richtigem Betrieb;
- fast geruchsfreies, steriles, hygienisch einwandfreies Endprodukt;
- geringe Restfeuchte es staubfreien Trockenproduktes (bis zu 98 % Trockensubstanz möglich);
- geringe BSB und CSB-Werte des Kondensates durch Brüdenfilter;
- bei Dampferzeugung aus getrocknetem Schlamm geringer zusätzlicher Energieaufwand;
- Senkung der Personalkosten durch automatischen Betrieb und Überwachung der Gesamtanlage;
- niedrige Energiekosten, daher schnelle Amortsation der -- niedrigeren -- Investitions- und Anlagekosten.

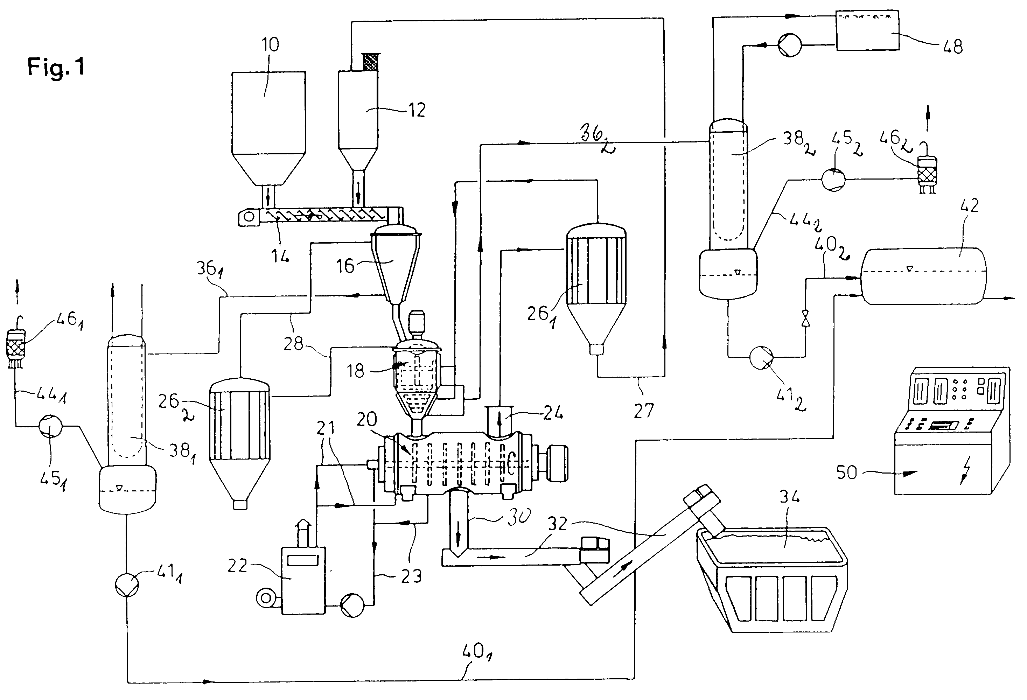

Weitere Vorteile, Merkmale und Einzelheiten der Erfindung ergeben sich aus der nachfolgenden Beschreibung eines bevorzugten Ausführungsbeispieles sowie anhand der Zeichnung; diese zeigt in ihrer einzigen Figur einen Verfahrensstammbaum einer Anlage zum Vakuumtrocknen von Klärschlämmen aus -- in der Zeichnung aus Gründen der Übersichtlichkeit nicht dargestellen -- kommunalen Kläranlagen.

Aus einem Lagerbehälter 10 wird Schlammkuchen zusammen mit Trockensubstanz und -- von einer Haupttrocknung kommendem -- Staub aus einem Silo 12 einem Granulator 14, etwa einem gestreckten Fördermischer, zugeführt sowie darin zu einem rieselfähigen Granulat vermischt. Diesem Granulator 14 ist unterhalb eines Zwischengefäßes 16 ein Vortrockner 18 nachgeschaltet, der als Konustrockner mit zusätzlichen Heizflächen und einem Doppelmantel ausgebildet ist. Die Heizflächen werden mit Brüden aus einem Segmentscheibentrockner als Haupttrockner 20 beheizt, im Doppelmantel der Wasserdampf kondensiert; ein großer Teil der Brüden aus dem Haupttrockner 20 kondensiert im Vortrockner 18 und gibt dort die Verdampfungswärme an das Produkt ab.

Der Segmentscheibentrockner 20 wird über eine Leitung 21 mit Dampf aus einem Kessel 22 beaufschlagt, dem der Abdampf aus dem Segmentscheibentrockner 20 über eine Leitung 23 rückgeführt wird.

Aus dem eine komplette Charge des Ganulators 14 aufnehmenden Vortrockner 18 wird das Produkt in kürzester Zeit unter Vakuum und ohne Unterbrechung des Vakuumbetriebes in den Haupttrockner 20 entleert, und der Vortrockner 18 kann wieder gefüllt werden.

Aus einem Kopfaustrag 24 des Haupttrockners 20 gelangt Staub zu einem Staubfilter 26, dessen Unterlauf 27 an das Staubsilo 12 angeschlossen ist. Ein weiterer Staubfilter 26 hängt mit einer Leitung 28 am Zwischengefäß 16 sowie an dem Vortrockner 18.

Der Austrag 30 des Haupttrockners 20 ist mit Entleerungsschnecken 32 verbunden, über welche ausgetragene Trockensubstanz einem Verladebehälter 34 zugefördert wird.

Sowohl dem Zwischengefäß 16 als auch dem Vortrockner 18 ist jeweils mittels einer Leitung 36 ein Kondensator 38 nachgeschaltet, dessen Ablauf 40 unter Zwischenschaltung einer Kondensatpumpe 41 einem Kondensattank 42 zugeführt ist. In den Kondensatoren 38 werden nicht kondensierte Brüden kondensiert und zusammen mit dem Kondensat aus dem Vortrockner 18 im Kondensattank 42 gesammelt.

Mit 48 ist ein Kühlturm bezeichnet, der oberhalb des Kondensators 38 des Segmentscheibentrockners 20 angebracht ist.

Beide Trockner 18, 20 haben ein eigenes Vakuumsystem mit Staubfiltern 26, in denen alle Staubteile > 10 Mikron abgeschieden werden. Das angefallene Kondensat kann der Weiterverarbeitung zugeführt werden.

Die durch Versuche erzielten BSB₅ und CSB₅-Werte liegen bei der erfindungsgemäßen Anlage unter 15 bzw. 50 mg/l.

Jene Kondensatoren 38 sind jeweils mittels einer Leitung 44 und einer Vakuumpumpe 45 an ein Aktivkohlefilter 46 angeschlossen. Als Vakuumpumpen 45 werden Flüssigkeitsring-Vakuumpumpen eingesetzt, die in Verbindung mit dem Kühlturm 48 das Brauchwasser im Kreislauf fahren. Als Kühlwasser kann -- unter bestimmten Voraussetzungen -- das Kondensat verwendet werden, dies auch für die Kühlung der Kondensatoren 38, so daß Frischwasser nahezu nicht benötigt wird. Die aus den Vakuumpumpen 45 anfallenden, nicht kondensierbaren Gase können über die beschriebenen Aktivkohlefilter 46 geführt oder in einem nicht dargestellten Ofen verbrannt werden.

In der Zeichnung ist symbolisch bei 50 eine Schalt- und Steuerwarte für die Anlage angedeutet.

## Patentansprüche

1. Verfahren zum mehrstufigen Behandeln von Schlamm- oder Preßkuchen aus Suspensionen oder schlammartigen Gemischen, vor allem aus Klärschlamm kommunaler Kläranlagen, durch Auspressen eines Schlamm- oder Preßkuchens und dessen anschließendes thermisches Trocknen im Vakuum,
gekennzeichnet durch
wenigstens zwei Vakuumstufen zum Trocknen des Schlammoder Preßkuchens, dem in einer Mischzone vor der ersten Vakuumstufe Trockensubstanz zugemischt wird.

2. Verfahren nach Anspruch 1, gekennzeichnet durch einen Mischvorgang vor der nachfolgenden Vakuumstufe.

3. Verfahren nach Anspruch 1 oder 2, dadurch gekennzeichnet, daß die Trockensubstanz aus dem Trocknungsverfahren zur Mischzone geführt wird.

4. Verfahren nach Anspruch 1, 2 oder 3, dadurch gekennzeichnet, daß die Charge der Vortrocknung ohne Unterbrechung des Vakuumbetriebes in die Haupttrocknung entleert wird.

5. Verfahren nach einem der Ansprüche 1 bis 4, gekennzeichnet durch einen Anteil der zugeführten Trockensubstanz an der Trocknungscharge des Produktes, der so gewählt wird, daß die sog. Leimphase überschritten wird.

6. Verfahren nach einem der Ansprüche 1 bis 5, dadurch gekennzeichnet, daß der Preßkuchen auf 90 bis 95 % Trockensubstanz getrocknet wird.

7. Verfahren nach einem der Ansprüche 1 bis 6, dadurch gekennzeichnet, daß die Brüden der Haupttrocknung in der Vortrocknung kondensiert werden und die Verdampfungswärme dem Preßkuchengemisch zugeführt wird.

8. Anlage zum mehrstufigen Behandeln von Schlamm- oder Preßkuchen aus Suspensionen oder schlammartigen Gemischen, vor allem aus Klärschlamm kommunaler Kläranlagen, durch Auspressen eines Schlamm- oder Preßkuchens und dessen anschließendes thermisches Trocknen im Vakuum zur Durchführung des Verfahrens nach einem der voraufgehenden Ansprüche, dadurch gekennzeichnet, daß einem Vortrockner (18) ein Haupttrockner (20) nachgeschaltet ist sowie vor dem Trockner (18 oder 20) ein Mischer (14) angeordnet ist.

9. Anlage nach Anspruch 8, dadurch gekennzeichnet, daß der Mischer (14) mit einem Lagerbehälter (10) für preßkuchen sowie einem Staubsilo (12) verbunden ist.

10. Anlage nach Anspruch 8 oder 9, dadurch gekennzeichnet, daß der Haupttrockner (20) ein Segmentscheibentrockner ist und daß der Mischer (14) vor dem Vortrockner (18) angeordnet ist.

11. Anlage nach einem der Ansprüche 8 bis 10, dadurch gekennzeichnet, daß das Staubsilo (12) den Trocknern (18, 20) nachgeschaltet ist.

12. Anlage nach einem der Ansprüche 8 bis 11, dadurch gekennzeichnet, daß der Vortrockner (18) als Konustrockner ausgebildet ist und einen Doppelmantel und/oder zusätzliche Heizflächen aufweist, wobei Heizfläche/n und/oder Doppelmantel des Vortrockners an wenigstens eine Brüdenableitung des Haupttrockners (20) angeschlossen sind/ist.

## Claims

1. Method for the multi-stage treatment of sludge or press cakes produced from suspensions or sludge-like mixtures, above all from sewage sludge from domestic sewage plants, by pressing out a sludge or press cake and then subjecting it to thermal drying in vacuo, characterised by at least two vacuum stages for drying the sludge or press cake, to which dry material is added in a mixing zone upstream of the first vacuum stage.

2. Method according to claim 1, characterised by a mixing process upstream of the subsequent vacuum stage.

3. Method according to claim 1 or claim 2, characterised in that the dry material is advanced from the drying process to the mixing zone.

4. Method according to claim 1, 2 or 3, characterised in that the charge from the preliminary drying stage is emptied into the main drying stage without interrupting the vacuum operation.

5. Method according to one of claims 1 to 4, characterised by a proportion of dry material supplied to the drying charge of the product selected in such a manner that the so-called glue phase is passed.

6. Method according to one of claims 1 to 5, characterised in that the press cake is dried to a dry material content of 90 to 95 %.

7. Method according to one of claims 1 to 6, characterised in that the vapours from the main drying stage are condensed in the preliminary drying stage and the heat of evaporation is supplied to the press cake mixture.

8. Installation for the multi-stage treatment of sludge or press cakes produced from suspensions or sludge-like mixtures, above all from sewage sludge from domestic sewage plants, by pressing out a sludge or press cake and then subjecting it to thermal drying in vacuo for carrying out the method according to one of the preceding claims, characterised in that a main drier (20) is arranged downstream of a preliminary drier (18) and a mixer (14) is arranged upstream of the drier (18 or 20).

9. Installation according to claim 8, characterised in that the mixer (14) is connected to a storage container (10) for press cakes and to a dust hopper (12).

10. Installation according to claim 8 or claim 9, characterised in that the main drier (20) is a segmental disc drier and that the mixer (14) is arranged upstream of the preliminary drier (18).

11. Installation according to one of claims 8 to 10, characterised in that the dust hopper (12) is arranged downstream of the driers (18, 20).

12. Installation according to one of claims 8 to 11, characterised in that the preliminary drier (18) is a cone drier and has a double-walled jacket and/or additional heating surfaces, the heating surface/s and/or the double-walled jacket of the preliminary drier being connected to at least one vapour outlet of the main drier (20).

## Revendications

1. Procédé pour le traitement en plusieurs étages de tourteaux ou de tourteaux de boue faits de matières en suspension ou de mélanges boueux, principalement de boues de curage de stations d'épuration communales, par pressurisation d'un tourteau ou d'un tourteau de boue puis dessication thermique de celui-ci sous vide, caractérisé par
au moins deux étages de vide pour la dessication du tourteau ou du tourteau de boue, auquel est mélangée une substance sèche dans une zone de mélange, avant le premier étage de vide.

2. Procédé suivant la revendication 1, caractérisé par un processus de mélange précédant l'étage de vide suivant.

3. Procédé suivant la revendication 1 ou 2, caractérisé en ce que la substance sèche du processus de dessication est conduite à la zone de mélange.

4. Procédé suivant la revendication 1, 2 ou 3, caractérisé en ce que la charge de la pré-dessication est vidée dans la dessication principale sans interruption de l'activation du vide.

5. Procédé suivant l'une des revendications 1 à 4, caractérisé par une proportion de la substance sèche amenée par rapport à la charge de dessication du produit, proportion choisie de telle sorte que ce que l'on appelle la phase de collage est dépassée.

6. Procédé suivant l'une des revendications 1 à 5, caractérisé en ce que le tourteau est séché de manière à obtenir de 90 à 95% de substance sèche.

7. Procédé suivant l'une des revendications 1 à 6, caractérisé en ce que les vapeurs de la dessication principale sont condensées dans la pré-dessication et que la chaleur d'évaporation est conduite au mélange de tourteau.

8. Installation pour le traitement à plusieurs étages de tourteaux ou de tourteaux de boue faits de matières en suspension ou de mélanges boueux, principalement de boues de curage de stations d'épuration communales, par pressurisation d'un tourteau ou d'un tourteau de boue puis dessication thermique de celui-ci sous vide, pour exécution du procédé suivant l'une des revendications précédentes, caractérisée en ce qu'un pré-dessicateur (18) est monté en aval d'un dessicateur principal (20) et qu'un mélangeur (14) est disposé avant le dessicateur (18 ou 20).

9. Installation suivant la revendication 8, caractérisée en ce que le mélangeur (14) est relié à un réservoir de stockage (10) pour tourteaux ainsi qu'à un silo à poussières (12).

10. Installation suivant la revendication 8 ou 9, caractérisée en ce que le dessicateur principal (20) est un dessicateur à disque segmenté et en ce que le mélangeur (14) est disposé avant le pré-dessicateur (18).

11. Installation suivant l'une des revendications 8 à 10, caractérisée en ce que le silo à poussières (12) est disposé en aval du dessicateur (18, 20).

12. Installation suivant l'une des revendications 8 à 11, caractérisée en ce que le pré-dessicateur (18) est réalisé sous la forme d'un dessicateur conique, et présente une double enveloppe et/ou des surfaces de chauffage supplémentaires, la/les surface(s) de chauffage et/ou la double enveloppe du pré-dessicateur étant connectée(s) à au moins une conduite d'évacuation des vapeurs du dessicateur principal (20).
